# EUROPEAN PATENT SPECIFICATION

(11) **EP 1 185 029 B1**
(45) Date of publication and mention of the grant of the patent: **29.09.2010**
(21) Application number: 01119885.0
(22) Date of filing: 17.08.2001
(51) Int. Cl.: H04L 12/24

(54) **Service deployment in data networks**
Dienst-Verteilung in Datennetzwerken
Distribution de service dans des réseaux de donnée

(30) Priority: 01.09.2000 EP 00118965
(43) Date of publication of application: 06.03.2002
(73) Proprietor: International Business Machines Corporation, Armonk, NY 10504 (US)
(72) Inventor: Droz, Patrick, 8803 Rueschlikon (CH); Haas, Robert, 8134 Adliswil (CH)
(74) Representative: Meyer, Michael Josef

(56) References cited:
- WO-A-00/24182
- US-A- 5 692 106
- US-A- 5 923 850
- BRUNNER M: "A Service Management Toolkit for Active Networks" NOMS 2000, 10 April 2000 (2000-04-10), pages 265-278, XP010376688 IEEE
- FERNANDO A ET AL: "A new dynamic architecture for an active network" OPEN ARCHITECTURES AND NETWORK PROGRAMMING, 2000. PROCEEDINGS. OPENARCH 2000. 2000 IEEE THIRD CONFERENCE ON TEL AVIV, ISRAEL 26-27 MARCH 2000, PISCATAWAY, NJ, USA,IEEE, US, 26 March 2000 (2000-03-26), pages 121-127, XP010376209 ISBN: 0-7803-6268-3

## Description

The present invention relates in general to service deployment in data networks and in particular to service deployment in heterogeneous data networks comprising a plurality of nodes.

Services typically deployed in data networks include routing services involving selected nodes of a network and end to end services spanning an entire network. A differentiated service (diff-serv) scheme is one example of a service for deployment on a data network. In a typical diff-serv scheme, a network provider supplies multiple levels of network service each associated with a different charge. Users of the network then pay the charges associated with the level of service they require. In one known example of a differentiated service, data traffic of customers paying a premium rate for access to a network is granted transport priority over data traffic of customers paying at lower rate for network access. Continuing growth in data communications is generating increasing demand for diff-serv services as networks become increasingly congested. Network providers in general, and Internet Service Providers in particular, are increasingly seeking to offer diff-serv services to attract customers. However, to date, there has been no convenient solution to the problem of deploying diff-serv and other future services in large data networks such as the Internet.

In conventional data networks, services are deployed manually. This typically involves entry of a new set of configuration commands or program code updates at each node in the network whenever the introduction of a new service was desired. These manual updates are a laborious, time consuming, and error-prone task for network operators.

Many conventional data networks include a centralized network manager having connections through the network to each node therein. The network manager typically comprises a dedicated computer connected to the network. The computer is programmed with specialized network management software. Examples of such network management software include the Open View software available from Hewlett Packard, the Net View software available from Tivoli Systems, and the CiscoWorks software available from Cisco Systems. Typically, each node in the network has agent software for cooperating with the network manager. Two way communications between the network manager and the agents enable the network management platform limited control of the nodes of the managed network. However, such control does not extend to the deployment of services in the managed network. Also, conventional network managers and their agents are not scalable. In short, conventional network management systems are not suitable for deploying services over large heterogeneous networks.

Some relatively recently introduced routing protocols, such as the Private Network to Network Interface ("PNNI"), permit, to a limited extent, automatic set up of end to end connection supporting QoS in a network without manual configuration of each node in the network. Some other protocols, such as Active Networks Encapsulation Protocol, deploy services via a packet-based approach in which a packet traversing the network loads or attempts to load the service into each node it traverses in the network. Successful operation of this packet-based approach relies on the following conditions:
I) that the network is homogeneous in the sense that each and every node in the network is capable of running code carried in the packet traversing the network; and,
II) that each node in the network is able to perform the desired service.

In practice, these conditions are not always met. Nodes that are unable to obtain the code, to run the code, or to support the service either discard the packet or forward it to the next node. This is clearly undesirable. In some examples of the packet-based approach, configuration codes are not embedded in packets. Instead, the nodes of the network are required to obtain new configuration program code by querying a central code repository or a distributed database, or by querying preceding nodes which have already downloaded the code needed. These queries introduce additional traffic, delays and complexity to the network. The packet-based approach is not suitable deploying services in a relatively large number of data networking applications. For example, the packet-based approach is unsuitable for deploying services in a network in which hop-by-hop routing is performed because, in such networks, there is no guarantee that a flow of packets will always traverse the same nodes. The Internet is an example of a network in which hop by hop routing is performed..

In "Spawning Networks", IEEE Network Magazine, July/August 1999, Campbell et al. propose a high level method for automatically deploying virtual network architectures based on distributed object technology and centralized profile databases. In "Virtual Active Networks - Safe and Flexible Environments for Customer-Managed Services", Proceedings of 10th IFIP/IEEE International Workshop on Distributed Systems (DSOM'99), Zurich Switzerland, October 1999, Brunner et al. Disclose a framework for isolating services deployed in different virtual active networks (VANs). However, the creation of the VANs remains a manual task. Active networks typically utilize the aforementioned packet-based deployment approach. This approach is not suitable for service deployment in a heterogeneous network in which a predictable and coordinated deployment of services is desirable. Heterogeneous networks, and abstraction for links traversing non-active hops therein, are discussed by Bharghavan et al. in "A Scalable Architecture for Active Networks", OPENARCH 2000, Tel Aviv, Israel, March 2000. In Internet Protocol (IP) and Asynchronous Transfer Mode (ATM) networks, hierarchical structures are employed to aggregate and propagate routing information. IP networks only aggregate routing information. However, ATM PNNI also summarizes bandwidth and delay characteristics to allow QoS routing. In "Transition Matrix Generation for Complex Node Representation", Proc. IEEE ATM Workshop 1999, pp489-500, Kochi, Japan, May 1999, Iliadis et al. describes a complex node representation that captures characteristics of nodes at lower levels of a network hierarchy. In "An Approach to Hierarchical Network Management Architecture Based on SNMPv2", Smartnet'99, the Fifth IFIP Conference on Intelligence in Networks, Thailand, November 1999, Xiao et al. describes a distributed network management scheme in which hierarchical structures are employed to scale with large numbers of nodes. It would be desirable to provide a scalable solution to the problem of conveniently organizing and automatically deploying services across a relatively large heterogeneous data network in a flexible manner.

Brunner, M investigates in "A Service Management Toolkit for Active Networks", NOMS 2000, 10 April 2000, pages 265-278, XP010376688, IEEE the realization of service management on a Virtual Active Network. The Virtual Active Network abstraction transforms a multi-domain environment into a single domain view for a customer.

In US 5, 692, 106 declarative models are described that are constructed of various services provided by a system. The models specify the requirements that need to be met for the corresponding service to be available.

In accordance with the present invention, there is now provided a method for deploying a service according to a service allocation policy in a data network comprising a plurality of network nodes, the service allocation policy governing selection of nodes for deployment of the service, the method comprising: defining a service deployment hierarchy having a lowest level comprising the network nodes and one or more progressively higher levels in each of which groups of nodes in the preceding level are represented by respective logical nodes; supplying a service solicitation, indicative of requirements of the service to be deployed, from the logical node in an upper level of the hierarchy to the network nodes in lower levels of the hierarchy; comparing the service solicitation with capabilities of each network node to generate metrics indicating the ability of the node to support the service to be deployed; summarizing the metrics to generate summarized metrics for the next level up of the hierarchy, and repeating the summarizing step for successive levels; generating a service dissemination command, specifying the service to be deployed, in dependence on the summarized metrics in said upper level; supplying the service dissemination command with the service allocation policy from a logical node in the upper level of the hierarchy to nodes in the or each lower level of the hierarchy; and automatically installing the service specified in the service dissemination command in network nodes selected in accordance with the allocation policy.

In preferred embodiment of the present invention, the method comprises maintaining information in a logical node representing one or more of the selected nodes to allow dynamic redeployment of the service.

The summarizing step preferably comprises a different summarization procedure for different groups of nodes in one or more of the levels.

Viewing the present invention from another aspect, there is now provided a network system comprising a plurality of nodes, the system being arranged to perform a service deployment method as herein before described.

The present invention also extends to a network node of such a network system. In addition, the present invention extends to a computer program element comprising computer program code means for loading into nodes of a network system to configure the system to perform a method as herein before described.

The present invention provides a scalable solution to the problem of conveniently organizing and automatically deploying services in a data network, with increased flexibility and with reduced time to respond to customer demands. This task of network management is transferred from the network manager to the network itself.

It is to be appreciated that, where features are described herein with reference to a method embodying the present invention, corresponding features may be provided in accordance with apparatus embodying the invention, and vice versa.

Preferred embodiments of the present invention will now be described, by way of example only, with reference to the accompanying drawings, in which:
Figure 1 is a block diagram of a programmable network node;
Figure 2, is a block diagram of another programmable network node
Figure 3 is a flow chart associated with operation of the programmable network node shown in Figure 2;
Figure 4 is a block diagram of a service deployment hierarchy for a data network showing summarization of capabilities;
Figure 5 is a flow chart of a service deployment for a data network;
Figure 6 is a block diagram of a service deployment hierarchy for a data network showing service dissemination;
Figure 7 is a block diagram of a service deployment hierarchy for an ATM network;
Figure 8 is a block diagram of an IP routing hierarchy for the ATM network shown in Figure 7;
Figure 9 is a block diagram of another IP routing hierarchy; and,
Figure 10 is a block diagram of a virtual private network.

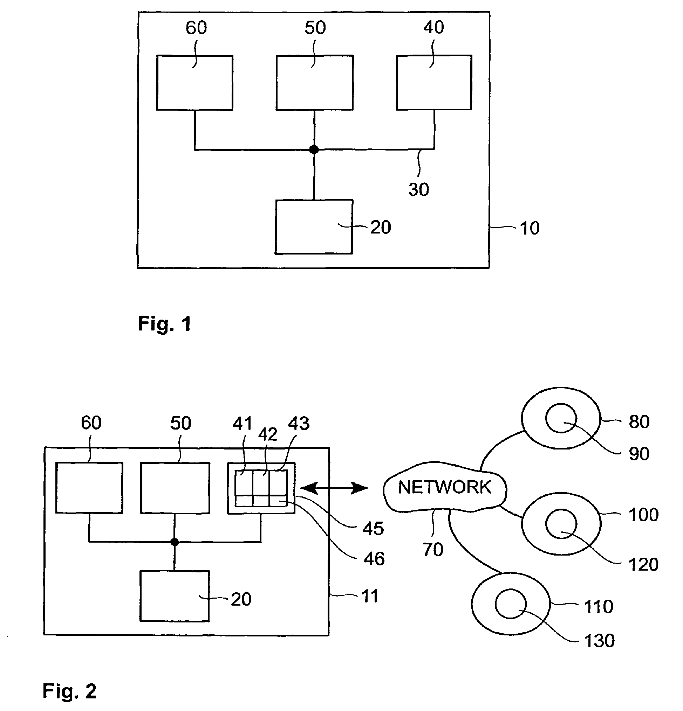

Referring first to Figure 1, in a preferred embodiment of the present invention, there is provided a programmable network node 10 comprising a processor 20, input output (I/O) ports 40, a first nonvolatile memory 60 for storing computer program coded instructions for execution by the processor 10, and a second nonvolatile memory 70 for storing a capabilities (CAPS) list indicative of the operating parameters of the node 10. A preferred example of the CAPS list will be described in detail shortly. The processor 20, I/O ports 40, first memory 60, and second memory 70 are all interconnected via a bus architecture 30. In particularly preferred embodiments of the present invention, the processor 20 comprises a microprocessor. In the interests of high speed operation, the microprocessor preferably has a Reduced Instruction Set (RISC) architecture. Examples of suitable RISC microprocessors include the i960 microprocessor available from Intel Corporation and the PowerPC microprocessor available from International Business Machines corporation (PowerPC is a trade mark of International Business Machines Corporation. In operation, the node 10 is installed in a network by connecting one or more of the I/O ports 40 to different nodes or end points to form communication links with such other nodes or end points. It will be appreciated that, depending on the capabilities of the I/O ports 40, the communication links may be physically provided by one or a combination of different networking technologies including optical fiber, copper wire, and a wireless medium such as radio frequency or infra red. Similarly, it will recognized that the communication links established by the I/O ports 40 may carry data according to one or more of a number of different physical layer protocols, including token ring, slotted ring, ethernet, and ATM. In operation, the program code stored in the first memory 60 configures the microprocessor to transfer data traffic between different ports of the I/O ports 40 in accordance with a particular routing function. The network node 10 can be configured by the program code to function as a router, switch, bridge, brouter, or similar data networking device. In some embodiments of the present invention, program code for configuring the node may be preprogrammed into the first memory 60 during manufacture of the node. Such preprogrammed code may be unchangeable. However, in other embodiments of the present invention, updates, amendments, and completely different code may be loaded into the first memory 60 from a remote location in the network via the I/O ports 40. It will be appreciated that the first memory 60 and the second memory 50 may, in some embodiments of the present invention, be implemented by logically partitioned portions of a single physical memory.

In preferred embodiments of the present invention, the CAPS list stored in the second memory 50 is coded in Extended Markup Language (XML). XML advantageously allows description of data items recorded in the CAPS list, together with rules for combining such data items with data items relating to characteristics of other nodes in the network. What follows now is a XML listing of an example of such a CAPS list. The CAPS list includes indications of the various operational and configuration Application Programming Interfaces (APIs) supported by the node. Also included in the CAPS list are numerous operating parameters of the node, such as processor speed and buffer size for example. These data items permit determination of whether or not a new service can be deployed on the node.

```
 <Network Processor>
      <base_capabilities>
             <API supported> PIN 1520 v.1.1</API_supported>
             <PIN_1520_specifics>
                     <version> 1.3 </version>
                     etc.
             </PIN_1520_specifics>
             <general>
                     <processing>
                            <speed> 500 MHz </speed>
                     </processing>
                     <scheduling>
                            <total_bandwidth> 100 Mbit/s <total_bandwidth>
                            <type>WFQ</type>
                            <max_queues>1000</max_queues>
                     </scheduling>
                     <buffers_management>
                            <total_buffer_size> 1 MB </total_buffer_size>
                            <max_buffer_pools> 16 </max_buffer_pools>
                            <buffer_sharing> yes </buffer_sharing>
                            <RED>yes</RED>
                     </buffers_management>
                     <forwarding>
                            <type> hardware </type>
                            <programmable> yes </programmable>
                            <fields> source destination address port </fields>
                            <rate> 100% line rate </rate>
                            <table_size> 100k entries </table_size>
                            <number_of_tables> 1 </number_of_tables>
                     </forwarding>
             </general>
             <resource_usage>
                      // current usage for the defined capabilities
              </resource_usage>

       </base_capabilities>
       <diff_serv> // absent if the NP does not provide explicit support for
 diff-serv
              <API_supported> standard_MIB <API_supported>
              <general>
                      <classifier>
                             <fields> 6 </fields>
                             etc.
                             </classifier>

                      etc.
              <general>
              <resource_usage>
                      // current usage for the defined capabilities
              </resource_usage>
       </diff_serv>
       etc.
 </Network Processor>
```

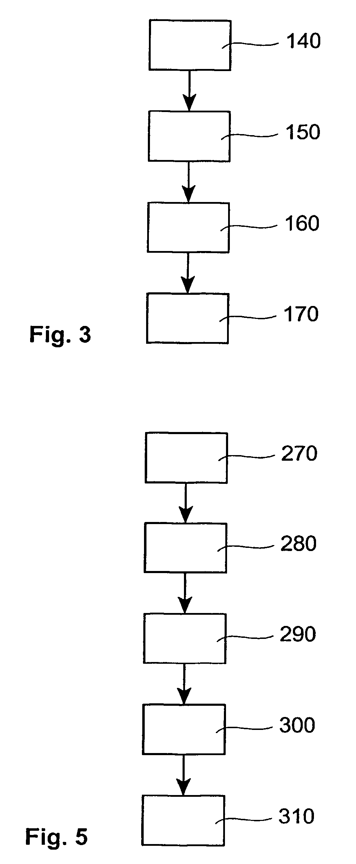

In some embodiments of the present invention, the CAPS list stored in the second memory 50 is fixed. However, in other embodiments of the present invention, the CAPS list stored in the second memory 50 may be reprogrammed or otherwise modified by addition or deletion of data items. This arrangement is particularly desirable for network nodes in which, for example, different combinations of I/O ports can be installed. Referring now to Figure 2, in a particularly preferred embodiment of the present invention, a node 11 is connected to a network 70. Node 11 is similar to node 10 herein before described with reference to Figure 1 with the exception that, in node 11, the I/O ports 40 are replaced by an I/O subsystem 45. Also connected to the network is a CAPS list library server 90, a pico-code library server 100, and a software protocol library server 110. The CAPS list library server 80 stores a library 90 of CAPS lists each corresponding to a different port module for the node 11. The pico-code library server 100 stores a library 120 of computer program code for configuring the processor 20. The software protocol library server 100 stores a library 130 of software routing protocols for execution by the processor 20 when routing data between ports of the I/O subsystem 41. The I/O subsystem 45 comprises a plurality of slots for receiving a corresponding plurality of changeable plug-in port modules 41, 42, and 43. Each of the port modules 41, 42, and 43 comprises a nonvolatile register 46 storing a unique identifier. With reference now to Figure 2 and 3 in combination, when, at step 140, a port module 43 is inserted into one of the slots, the processor 20 reads the unique identifier from the corresponding register 46. The unique identifier is then sent, at step 150, from node 11 to the library server 80. At step 160, the library server 80 recovers from the library 90, based on the received unique identifier, the CAPS list corresponding to port module 43 added to the node 11. At step 170, the library server 80 then returns the recovered CAPS list to the node 11. At step 180, the processor 20 adds the CAPS list for the added port module 43 to the CAPS list for the node 11 stored in the second memory 50. A similar process is performed to transfer updated program micro code for configuring the processor 20 from the pico-code library server 100 to the node 11 for storage in the first memory 60. Likewise, another similar process is performed to transfer new software routing protocols for execution by the processor 20 from the software protocol library server 110 to the node 11, again for storage in the first memory 60. In some embodiments of the present invention, node 11 itself may be provided with a unique identifier for recovering a corresponding CAPS list, processor program code, and set of software protocols, or any combination thereof, from the library servers 90, 100, and 110. It will also be appreciated that, in some embodiments of the present invention, the library servers 80, 100, and 110 may be implemented by a single server computer system connected to the network 70.

It should also be appreciated that, in other embodiments of the present invention, one or more of the aforementioned libraries 80, 120, and 130 may be stored in the node 11. Such embodiments clearly require more memory space resident in the node 11. However, transmissions of both unique identifiers across the network 70 to the library servers 80, 100, 110 and of CAPS lists, protocols, and processor program code from the library servers 80, 100, and 110 back to the node 11 are avoided, thereby freeing bandwidth which would otherwise be occupied by control traffic for carriage of data traffic.

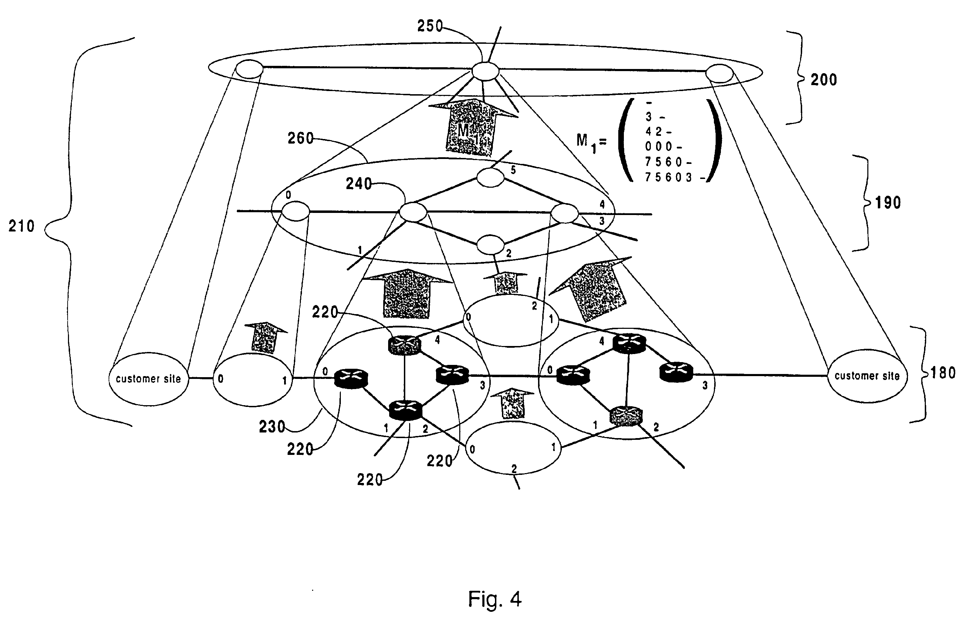

Referring now to Figure 4, in preferred embodiments of the present invention, a data network comprises nodes 220 as herein before described with reference to Figure 1 and 2. The nodes 220 of the data network are logically arranged into a Service Deployment Hierarchy 210. The Service Deployment Hierarchy 210 is based on the topology of the data network. However, it should be noted that the Service Deployment Hierarchy 210 does not distribute data indicative of node reachability and link status. Therefore, the Service Deployment Hierarchy 210 is different to a Routing Hierarchy such as Private Network Interface (PNNI) routing hierarchy. The Service Deployment Hierarchy 210 is created by grouping together nodes 220 in the same subnet 230. One of the nodes 220 is then elected as group leader. Each group 230 appears as a single logical group node 240 at the next level of the hierarchy. For example, at base level 180 of the hierarchy 210, nodes 220 in the subnet 230 are grouped into logical group node 240 of a logical subnet 260 in intermediate level 190. At top level 200, logical nodes of logical subnet 260 are grouped into logical group node 250.

Referring now to Figure 5, an example of a network service deployment scheme for the service deployment hierarchy 210 comprises a solicitation step 270, a summarization step 280, a dissemination step 290, an installation step 300, and an advertisement step 310.

In the solicitation step 270, requirements of a service to be deployed on the network are broadcast or multicast to nodes 220 of the network. Each of the nodes 220 compares the requirement of the service to be deployed with the capabilities specified in the CAPS list stored in its second memory 50. Each node 220 generates a result of the comparison in the form of a metric. If the requirements of a service are known in advance, or have a generic form, the solicitation step can be skipped.

In the summarization step 280, the metrics generated by the nodes 220 are summarized as they propagate up through the service deployment hierarchy 210 from the base level 180 to the top level 200. The summarization step permits the service deployment to be scalable. Once the metrics have been summarized up to the top level, node 250 indicates whether or not it is possible for the network to support this service

In the dissemination step 290, deployment of the service is performed by selecting only the nodes most suited to supporting the service at each of levels 180, 190, and 200 in the service deployment hierarchy 210. This selection is performed based on a Service Specific Allocation Policy (SSAP) for the service. Different services have different deployment requirements. For example, services may require deployment at every hop along a path. Other services however may only be needed at the edges of a path or at selected nodes of a network. The SSAP of a service specifies how the service should be deployed in the network

In the installation step 300, the service is installed in the nodes 220 at the base level 180 of the network according to the corresponding SSAP.

In the advertisement step 310, each node 220 advertises its installed services and dynamically learns the identities of other nodes 220 advertising the same services. This allows, for example, control services such as routing protocols to autoconfigure peers.

What follows now is a detailed description of the solicitation step. As mentioned earlier, in this step, the requirements of a service to be deployed on the network are broadcast or multicast to nodes 220 of the network. In preferred embodiments of the present invention the requirement of the services are encoded for broadcast or multicast in a markup language such as XML in a manner similar to that of the exemplary CAPS list herein before described. The requirements can be defined as routing protocols needed, physical and/or logical capabilities such as buffer size, number of queues etc., or a combination thereof. Some portions of the network can be omitted form solicitation step. For example, if the SSAP defines edges or endpoints between which the service is to be deployed, the solicitation step can multicast the requirement of the service only to those nodes between the end or edge points.

Services can be divided into two categories:
Those requiring a set of custom metrics and/or custom summarization rules that are not known in advance. Such metrics are derived from the aforementioned comparison of requirements of the service to be deployed and the contents of the CAPS list of each node receiving the requirements; and,
Those requiring only a set of generic metrics and/or summarization rules that are known in advance.

Some generic metrics may be advertised by default in the network via corresponding generic summarization rules. If such metrics are employed in deployment of new services with sufficient frequency, then advertising these metrics by default renders the solicitation and summarization steps redundant. Consequently, these steps can be omitted in some circumstances. This is especially desirable for deployment of services required to be installed in a reduced time period. A set of custom metrics has values resulting the aforementioned comparison of the requirements of the service to be deployed and corresponding entries in the CAPS list of the receiving node 220. The values in the set can be binary, simply indicating whether or not the node supports the service to be deployed. In one alternative, the values can indicate the cost at which the node is able to support the service. In another alternative, the values can indicate how well the node can support the service to be deployed. Returning to Figure 4, nodes capable of supporting a particular service, such as a diff-serv service, are shown, by way of example of a result of performing the solicitation step, in black.

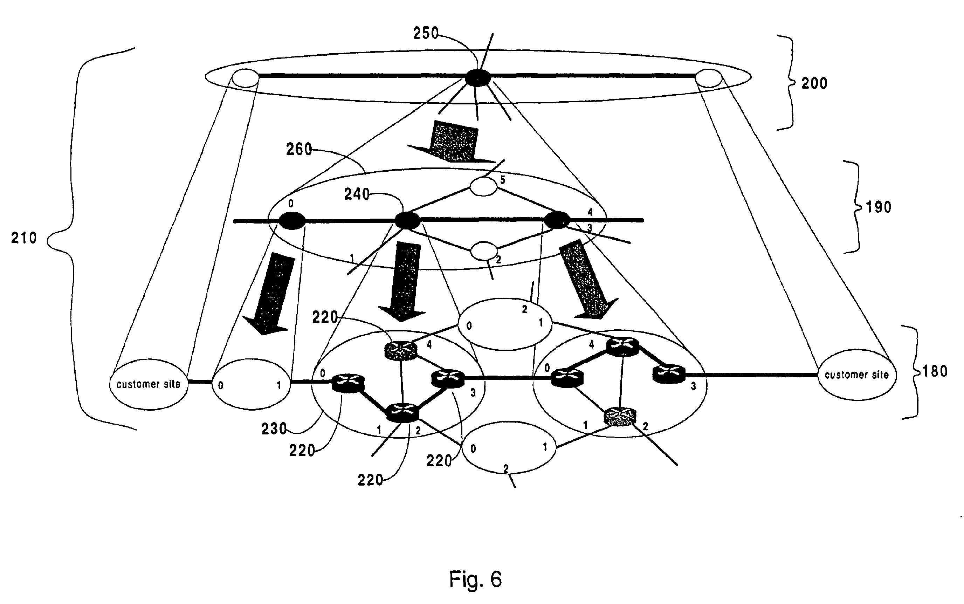

What follows now is a detailed description of the summarization step. As mentioned earlier, it is desirable in the interests of scalabliltiy to summarize the sets of metrics as the service deployment hierarchy 210 is upwardly traversed through successive levels. In particularly preferred embodiments of the present invention, the summarization step is performed at frequent intervals, and/or on occurrence of predefined events, in order to capture changes in the network. Referring to Figure 6, the set of metrics may be conveniently arranged into transition matrices between each successive level in the service deployment hierarchy 210 For example, M₁ is the transition matrix for logical subnet 260 in level 190. Edges of the subnets in the hierarchy 210 are numbered so that element m_{i,j} is defined as the number of hops on the shortest path between edges i and j providing a desired service, such as a diff-serv service, at each hop along the path. As the matrix is symmetric, only one half is shown.

What follows now is a detailed description of the dissemination step 290. In the dissemination step 290, the deployment of a service is directed by the corresponding SSAP. The SSAP contains topology oriented indications identifying, for example, which of the nodes 220 need be enabled with the service. More specifically, the dissemination step 290 begins with a dissemination command to deploy the service being launched from the top most node 250 in the hierarchy 210. The dissemination command travels down the hierarchy 210 together with the corresponding SSAP. At each level in the hierarchy 210, the group leader forwards the dissemination command only to those nodes in which service needs to be deployed, rather than flooding the group with the dissemination command. This advantageously minimizes congestion of the network. In particularly preferred embodiments of the present invention, the group leader does not propagate the dissemination command to nodes in the level below unless it has been selected to do so. Provided that the service remains active, the nodes 220 deploying the service maintain the service. This allows the service to be redeployed automatically when significant changes occur. The SSAP defines what constitutes a significant change. To avoid redeployment of a service whenever a routing change occurs, heuristics can be employed during transmission of the dissemination command so that the service is deployed on a set of paths. These heuristics are also contained in the SSAP. Referring again to Figure 4, in the matrix M₁, m_{1,5} is non-zero, indicating that the network is capable of supporting the required service. Therefore, referring to Figure 6, dissemination is performed such that the shortest path is selected at each level in the hierarchy 210 based on the transition matrices provided by the lowest level. The nodes on the path then forward the dissemination command down to the next level in the hierarchy 210 until the dissemination command reaches the lowest level 180 where the physical nodes 220 are located. Here, the services are installed individually on each node 220. In Figure 6, the edges of the shortest path are shown as thicker lines at each level, and the nodes along the path at each level are shaded.

The solicitation and disemination steps may be initiated by a network manager connected to the network on which the service is to be deployed; by a gateway in response to an end user request; or via a combination of the two.

What follows now is a detailed description of the installation step. The installation of the service in the nodes 220 when the dissemination command reaches the lowest level 180 in the hierarchy 210 is automatic. In preferred embodiments of the invention, a link to a repository containing code for configuring the node to perform the service is included in the SSAP accompanying the dissemination command. Alternative, if the configuration code associated with the deployed service is relatively small, the code may be contained in the dissemination command.

What follows now is a detailed description of the advertisement step. Once installed, the service either discovers neighbors with which it exchanges control messages or is advertised so that data packets are routed towards their destination over nodes enabled with the service. The former uses explicit address signaling. Other examples of explicit addressing include most routing protocols, where routing update messages are explicitly addressed to peer nodes. The latter uses implicit address signaling. Implicit addressing does not require a node to use the addresses of its peers running the same service to execute the service. Examples of implicit addressing are in-band signaling such as that found in Internet Engineering Task Force (IETF) Differentiated Services (diff-serv) or out of band signaling such as that found in IETF RSVP. In the preferred embodiments of the present invention herein before described with reference to Figures 4 and 6, the deployment of a diff-serv service was contemplated. As mentioned earlier, such as service is an example of an implicit addressing service. In the advertisement step, nodes on which such a service is deployed advertise the service. The advertisements are again summarized and distributed. Here, the transition matrices associated with the advertisements are identical to those created in the summarization step, because there is only one path that supports the diff-serv service between the end points. The summarized advertisements are combined with routing to provide appropriate routes. It will be appreciated that aligning the service deployment hierarchy 210 and the routing hierarchy of a network significantly eases execution of the advertisement step when implicit addressing services are deployed.

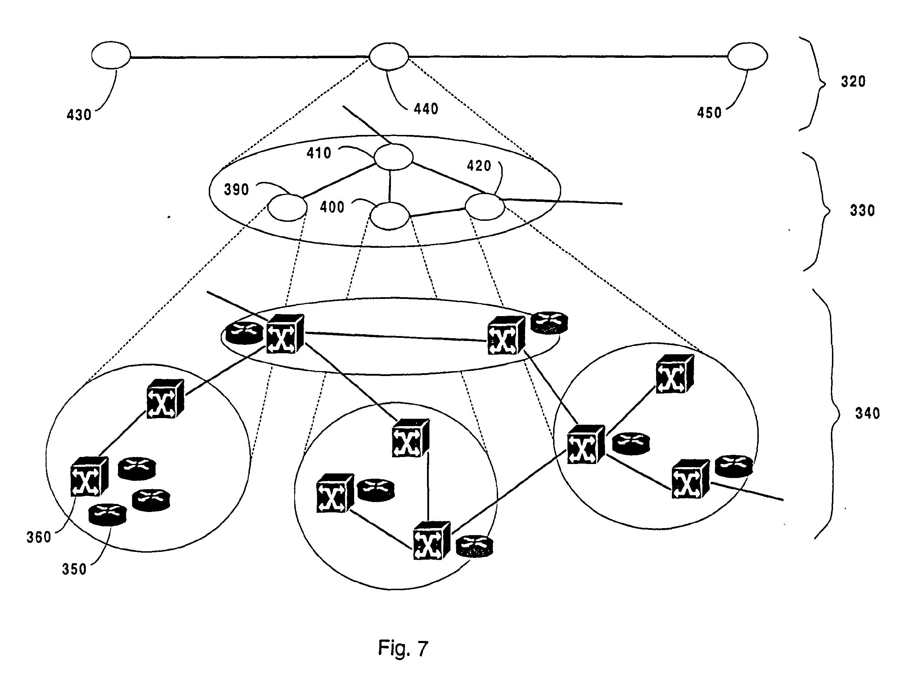

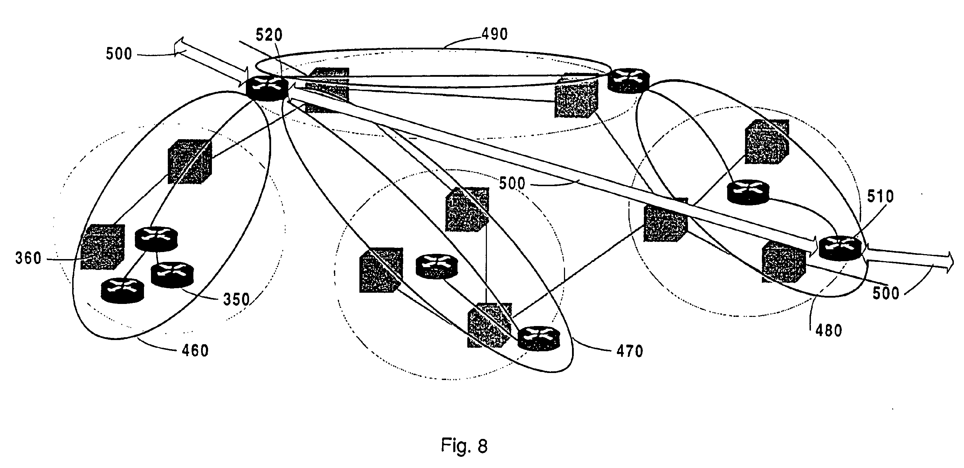

Referring now to Figure 7, an example of an ATM-PNNI network embodying the present invention will now be described to exemplify application of the aforementioned service deployment hierarchy to the deployment of an Internet Protocol (IP) routing service. This service is an explicit addressing out of band control service. The ATM-PNNI network comprises a plurality of ATM switch nodes 360 to which are connected IP router nodes 350. The service deployment hierarchy comprises three levels, 320, 330 and 340. Level 330 has logical nodes 390, 400, 410, 420. Level 320 has logical group 440 between groups 430 and 450. The IP routing hierarchy matches the service deployment hierarchy and the PNNI hierarchy. Open Shortest Path First (OSPF) and Border Gateway Protocol (BGP) services are automatically installed at appropriate layers. Further details of OSPF can be found in IETF Request for Comments (RFC) 1583. The solicitation and summarization steps are skipped for the purpose of this description. Focussing instead on the dissemination step, the SSAP may, for example select node 410 as the OSPF backbone area. Then in each OSPF area, routers 350 interconnect with other routers 350 in the same area. The advertisements from all OSPF routers 350 are limited to their respective groups, with the exception of the border area routers of the backbone area, which are advertised in all areas. The routers 3350 chosen to run the BGP service are advertised up to the top level 320 so that they can be seen from their peers in groups 430 and 450 as well as group 440. Referring now to Figure 8, the resulting IP routing hierarchy comprises an OSPF autonomous system comprises four OSPF areas 460, 470, 480, and 490, together a BGP path 500 spanning two BGP speaking nodes 510 and 520.

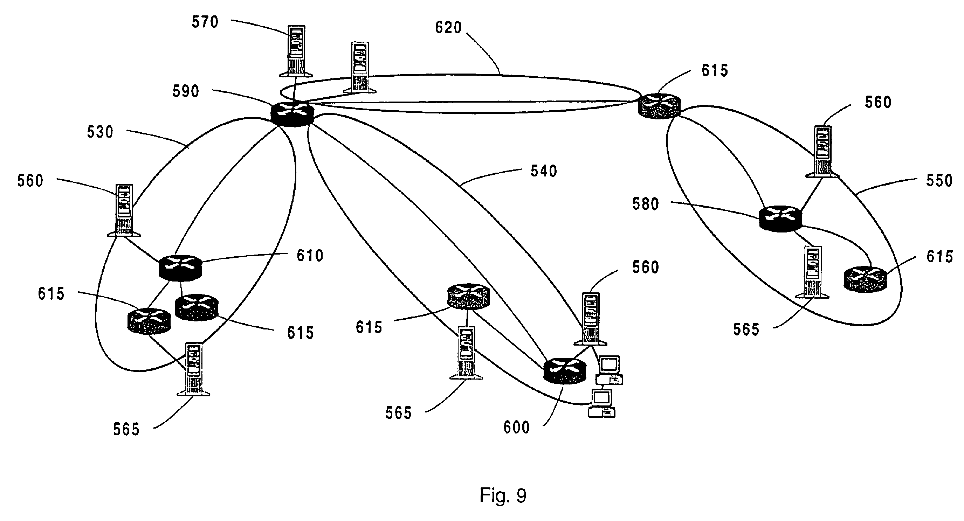

Referring to Figure 9, in another example of the present invention, there is provided an IP network including a plurality of servers 560, 565, and 570 and a plurality of router nodes 580, 590, 600, and 610. An explicit-addressed in band service is deployed in the network. The deployment of the service will result in servers 560 and 570 running the proxy cache. Thus, transparent HTTP clients (not shown) are connected to the proxy cache servers 560 and 570. Because the proxy caches 560 are transparent, the HTTP clients need not be configured with the addresses of their proxy caches 560 and 570. Instead, the routers 580, 600, and 610 perform layer 4 switching and redirect HTTP requests to the proxy cache servers 560. To improve response time, two layers of caches are employed. The first level caches 560 contains the pages most often requested by local users. The second level cache 570 contains the pages most often used by all users. For the purpose of this description, it is assumed that an adequate routing and addressing function is already in place on the network before service deployment. During the solicitation step, the specific requirements to support the service are sent to the nodes 580, 590, 600, 610 and 615. Here, the requirements include minimum processing capacity and storage on the directly attached servers 570, 565, and 560, and the ability for the routers 580, 590, 600, 610, and 615 to perform layer 4 switching. The logical representing the backbone area 620 receives a solicitation with requirements corresponding to second level cache 570. However, the logical nodes representing areas 550, 540, and 530 receive requirements for a first level cache 560. The resulting metric, which may be in binary, are then sent up the service deployment hierarchy and summarized for each logical group as herein before described. The summarization is performed by a logical OR of the results from each router 580, 590, 600, 610, and 615. The metrics can then be summarized again via a logical AND of the previous results. The logical node representing the entire network is thereby determined whether or not the desired service can deployed over the current network infrastructure. This example demonstrates custom summarization rules that vary from one level of the service deployment hierarchy to another. The system is transparent to the uses. Therefore, they do not receive advertisements from this service deployment. However, the first level caches 560 forward cache misses to the second level cache 570. Therefore, the second level cache 570 generates advertisements of its address. These advertisements are contained within the Autonomous system and directed to the first level caches 560 only rather than being flooded throughout the network.

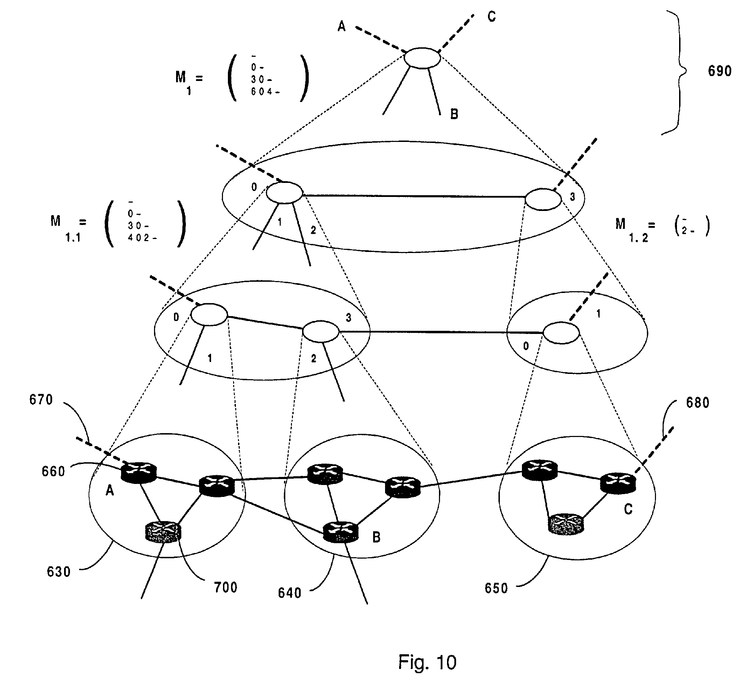

The application of the present invention to a Virtual Private Network (VPN) employing virtual outside links will now be described with reference to Figure 10. The diff-serv examples of the present invention herein before described are applicable to transit networks. Therefore, no virtual outside links were required. A VPN typically interconnects subnets 640, 650, and 660 in the same network. VPNs usually require a defined QoS, together with encryption capabilities at end points. The desired QoS is signaled by a protocol such as IETF RSVP. In this example ,it assumed that end points of the VPN are set. In Figure 10, these end points are identified by the letter A, B, and C. The network in which the VPN is formed comprises both RSVP capable router nodes 660 and RSVP incapable router nodes 700. During the solicitation step, the SSAP includes addresses of the desired end points for the VPN so that appropriate virtual outside links 670 and 680 can be created during the summarization step. Otherwise, the upper level 690 of the service deployment hierarchy would be unable to determine whether or not it is possible to interconnect end points A, B, and C with RSVP capable routers 660 . The transition matrices corresponding to the service deployment hierarchy are similar to those described with diff-serv example herein before described with reference to Figure 4. In matrix M₁, which is created from matrices M_{1..1} and M_{1.2}, m_{2,0}=3, which is the cost of the VPN between end points A and B. Similarly, the cost of the VPN between end points B and C is m_{3,2} =4, and the cost between end points A and C is m_{3.0} =6. The dissemination step can then begin, by selecting deployment of the VPN between end points A and B, and B and C, so as to minimize the overall cost.

In summary, what has been described by way of example of the present invention is described is a method for deploying a service according to a service allocation policy in a data network comprising a plurality of network nodes. The allocation policy governs selection of nodes for deployment of the service. The method comprises defining a service deployment hierarchy having a lowest level comprising the network nodes and one or more progressively higher levels in each of which groups of nodes in the preceding level are represented by respective logical nodes. The method also includes generating a service dissemination command specifying the service to be deployed. The service dissemination command is supplied, along with the allocation policy, from a logical node in an upper level of the hierarchy to nodes in the or each lower level of the hierarchy. The service specified in the service dissemination command is automatically installed in network nodes selected in accordance with the allocation policy. A network system comprising a plurality of nodes was also described by way of another example of the present invention. The system is arranged to perform the aforementioned service deployment method. A network node for such a network system was also described by way of yet another example of the present invention.

## Claims

1. A method for deploying a service according to a service allocation policy in a data network comprising a plurality of network nodes, the service allocation policy governing selection of nodes for deployment of the service, the method comprising:
defining a service deployment hierarchy (210) having a lowest level (180) comprising the network nodes (220) and one or more progressively higher levels (190, 200) in each of which groups of nodes in the preceding level are represented by respective logical nodes;
supplying (270) a service solicitation, indicative of requirements of the service to be deployed, from the logical node (250) in an upper level (200) of the hierarchy to the network nodes in lower levels of the hierarchy;
each node comparing the service solicitation with its capabilities to generate metrics indicating the ability of the node to support the service to be deployed;
summarizing (280) the metrics to generate summarized metrics for the next level up of the hierarchy, and repeating the summarizing step for successive levels;
generating a service dissemination command, specifying the service to be deployed, in dependence on the summarized metrics in said upper level
supplying (290) the service dissemination command with the service allocation policy from a logical node in the upper level (200) of the hierarchy to nodes in the or each lower level of the hierarchy; and
automatically installing (300) the service specified in the service dissemination command in network nodes selected in accordance with the allocation policy.

2. A method as claimed in claim 1, comprising maintaining information in a logical node representing one or more of the selected nodes to allow dynamic redeployment of the service.

3. A method as claimed in claim 1, wherein the summarizing step comprises a different summarization procedure for different groups of nodes in one or more of the levels.

4. A network system comprising a plurality of nodes, the system being arranged to perform a service deployment method as claimed in any preceding claim.

5. A network node of a network system as claimed in claim 4.

6. A computer program element comprising computer program code means for loading into nodes of a network system to configure the system to perform a method as claimed in any of claims 1 to 3.

## Patentansprüche

1. Verfahren für das Anwenden eines Dienstes gemäß einer Dienstzuweisungsrichtlinie in einem Datennetzwerk, das eine Vielzahl von Netzwerkknoten umfasst, wobei die Dienstzuweisungsrichtlinie die Auswahl von Knoten für die Anwendung des Dienstes steuert, wobei das Verfahren Folgendes umfasst:
Definieren einer Dienstanwendungshierarchie (210) mit einer niedrigsten Ebene (180), welche die Netzwerkknoten (220) umfasst, und einer oder mehreren stufenweise höheren Ebenen (190, 200), wobei auf jeder dieser Ebenen Gruppen von Knoten auf der vorangehenden Ebene durch entsprechende logische Knoten dargestellt werden;
Zuliefern (270) einer Dienstanforderung, die Anforderungen des anzuwendenden Dienstes angibt, von dem logischen Knoten (250) auf einer höheren Ebene (200) der Hierarchie an die Netzwerkknoten auf niedrigeren Ebenen der Hierarchie;
Vergleichen der Dienstanforderung durch jeden Knoten mit seinen Fähigkeiten, um so Kennzahlen zu erzeugen, welche die Fähigkeit des Knotens zur Unterstützung des anzuwendenden Dienstes angeben;
Zusammenfassen (280) der Kennzahlen, um zusammengefasste Kennzahlen für die nächsthöhere Ebene der Hierarchie zu erzeugen, und Wiederholen des Zusammenfassungsschrittes für darauffolgende Ebenen;
Erzeugen eines Dienstverteilungsbefehls, der den anzuwendenden Dienst angibt, in Abhängigkeit von den zusammengefassten Kennzahlen auf der höheren Ebene;
Zuliefern (290) des Dienstverteilungsbefehls mit der Dienstzuweisungsrichtlinie von einem logischen Knoten auf der höheren Ebene (200) der Knotenhierarchie an die bzw. jede niedrigere Ebene der Hierarchie; und
automatisches Installieren (300) des in dem Dienstverteilungsbefehl angegebenen Dienstes in Netzwerkknoten, die gemäß der Zuweisungsrichtlinie ausgewählt werden.

2. Verfahren nach Anspruch 1, welches das Verwalten von Daten in einem logischen Knoten umfasst, die für einen oder mehrere der ausgewählten Knoten stehen, um eine dynamische Neuanwendung des Dienstes zu ermöglichen.

3. Verfahren nach Anspruch 1, wobei der Schritt des Zusammenfassens eine andere Verfahrensweise für das Zusammenfassen unterschiedlicher Gruppen von Knoten auf einer oder mehrerer der Ebenen umfasst.

4. Netzwerksystem, das eine Vielzahl von Knoten umfasst, wobei das System zur Durchführung eines Dienstanwendungsverfahrens gemäß einem beliebigen vorangegangenen Anspruch aufgebaut ist.

5. Netzwerkknoten eines Netzwerksystems nach Anspruch 4.

6. Computerprogrammelement, das Computerprogrammcodemittel für das Laden in Knoten eines Netzwerksystems umfasst, um das System so zu konfigurieren, dass ein Verfahren nach einem beliebigen der Ansprüche 1 bis 3 durchgeführt wird.

## Revendications

1. Procédé de déploiement d'un service, selon une règle d'allocation de service, dans un réseau de données comprenant une pluralité de noeuds de réseau, la règle d'allocation de service gouvernant une sélection de noeuds pour déploiement du service, le procédé comprenant :
la définition d'une hiérarchie de déploiement de service (210) ayant un niveau le plus bas (180) comprenant les noeuds de réseau (220) et un ou plusieurs niveaux (190, 200) progressivement supérieurs, dans chacun desquels des groupes de noeuds dans le niveau précédent sont représentés par des noeuds logiques respectifs ;
la fourniture (270) d'une sollicitation de service, indicative d'exigences du service devant être déployé, à partir du noeud logique (250) dans un niveau supérieur (200) de la hiérarchie aux noeuds de réseau situés aux niveaux inférieurs de la hiérarchie ;
chaque noeud comparant la sollicitation de service à ses capacités, de manière à générer des métriques indiquant l'aptitude du noeud à supporter le service à déployer ;
récapituler (280) les métriques, de manière à générer des métriques récapitulées, pour le prochain niveau immédiatement supérieur de la hiérarchie, et répéter l'étape de récapitulation pour des niveaux successifs ;
générer une commande de dissémination de service, spécifiant le service devant être déployé, en fonction des métriques récapitulées dans ledit niveau supérieur ;
fournir (290) la commande de dissémination de service, avec la règle d'allocation de service, d'un noeud logique dans le niveau supérieur (200) de la hiérarchie à des noeuds situées dans le ou chaque niveau inférieur de la hiérarchie, et
installer (300) automatiquement le service spécifié dans la commande de dissémination de service, dans des noeuds de réseau sélectionnés selon la règle d'allocation.

2. Procédé selon la revendication 1, comprenant le maintien d'une information dans un noeud logique représentant un ou plusieurs des noeuds sélectionnés, pour permettre un redéploiement dynamique du service.

3. Procédé selon la revendication 1, dans lequel l'étape de récapitulation comprend une procédure de récapitulation différente, pour des groupes de noeuds différents, dans un ou plusieurs des niveaux.

4. Système de réseau comprenant une pluralité de noeuds, le système étant agencé pour mettre en oeuvre un procédé de déploiement de service tel que revendiqué selon l'une quelconque des revendications précédentes.

5. Noeud de réseau d'un système de réseau, tel que revendiqué selon la revendication 4.

6. Elément de programme informatique, comprenant des moyens de code de programme informatique pour chargement dans des noeuds d'un système de réseau, pour configurer le système pour mettre en oeuvre un procédé tel que revendiqué selon l'une quelconque des revendications 1 à 3.
